# EUROPEAN PATENT SPECIFICATION

(11) **EP 1 583 794 B1**
(45) Date of publication and mention of the grant of the patent: **09.05.2007**
(21) Application number: 04701659.7
(22) Date of filing: 13.01.2004
(51) Int. Cl.: C08J 9/00, C08K 5/526, C08L 61/00

(54) **A PHENOLIC FOAM**
PHENOLHARZSCHAUMSTOFF
MOUSSE PHENOLIQUE

(30) Priority: 13.01.2003 IE 20030014
(43) Date of publication of application: 12.10.2005
(73) Proprietor: Kingspan Holdings (IRL) Limited, Kingscourt (County Cavan) (IE)
(72) Inventor: COPPOCK, Vincent, Bunbury, Cheshire CW6 9SJ (GB); RYDER, Norman, Glossop, Derbyshire SK13 5HP (GB); MCCABE, Thomas, Kingscourt, County Cavan (IE)
(74) Representative: O'Brien, John Augustine
(86) International application number: PCT/IE2004/000005
(87) International publication number: WO 2004/063257

(56) References cited:
- EP-A- 1 084 177
- WO-A-98/50458
- US-A- 4 369 259
- US-A- 4 681 902
- DATABASE WPI Section Ch, Week 199212 Derwent Publications Ltd., London, GB; Class A21, AN 1992-093005 XP002283832 & JP 04 036327 A (ASAHI GLASS CO LTD) 6 February 1992 (1992-02-06)
- DATABASE WPI Section Ch, Week 197540 Derwent Publications Ltd., London, GB; Class A21, AN 1975-66231W XP002283833 & JP 50 034358 A (TEIJIN LTD) 2 April 1975 (1975-04-02)

## Description

### Introduction

The invention relates to phenolic foam used for insulation. The invention also relates to a phenolic resin used to prepare such foams.

Historically, phenolic resins have been the preferred thermosetting plastic material when low smoke emission and self-extinguishing ability are of paramount importance. One such application is in building and pipe insulation where phenolic foams provide both thermal insulation and fire resistance.

US4,369,259A describes in the comparative example the use of triphenylphosphite or trisnonylphenolphospite as an additive in phenolic resin foams.

JP04036327A describes a phenolic resin foam prepared using a blowing agent containing dichloromethone and an additive selected from a list that includes triphenylphosphite and/or trisnonylphenolphospite.

US4,681,902A describes a phenol aldehyde foam including a flame retardant comprising a blend of 70% w/w pentabromophenyl oxide and 30% w/w cresyl diphenyl phosphite.

Presently, in phenolic cellular foam manufacture, either a strong organic or inorganic acid commonly catalyses a phenolic resole resin. Possible acids include but are not restricted to sulphuric acid, phenol sulphonic acid, para toluene sulphonic acid, xylene sulphonic acid, phosphoric acid and blends thereof. For example, EP 0 170 357A describes a process for the production of an acid cured phenolic resin foam. The selection of acid type is dependent on the desired curing time and temperature.

Cellular insulation foam is produced when the blowing agent that has been blended into the resin, starts to boil. Halocarbons and hydrocarbons are commonly used blowing agents. Expansion typically occurs in the temperature range 25°C to 80°C. Care needs to be taken in the manufacture of phenolic foam to ensure that an excessive resin exotherm will not develop. The occurrence of an uncontrolled exothermic chemical reaction is more likely when a strong acid is used as catalyst. When exothermic reactions develop, large amounts of water or steam are created by the phenolic resins condensation polymerisation reaction. The consequential shrinkage of the curing resin matrix can adversely affect the ability to form a closed cell foam structure as well as impairing mechanical strength. A closed cell foam structure is highly desirable to maximise insulation performance and is quantified by measuring thermal conductivity (λ Value in W/m.K).

In one industrial process, laminated phenolic foam insulation panels of typical thickness 25 - 180 mm, and dry density above 40kg/m3, can be prepared with aluminium foil, paper, steel plates or glass mat facings. These panels are typically produced on a foam production line at 50 to 80°C in 5 - 20 minutes and then require an oven post-cure at 50 to 90°C for 8 - 72 hours to develop handling strength. A typical commercial phenolic foam resin system comprises the following ingredients listed with typical weight proportions, parts by weight. (pbw):
Phenolic resole resin containing ethoxylated castor oil surfactant: 100pbw
Blowing agent (typically halocarbon or hydrocarbon based): 10 - 20pbw
A strong mineral or organic acid: 15 - 25pbw

When phenolic foam panels are first manufactured, thermal conductivity (λ value) at 23°C is typically 0.016-0.026 W/m.K. Dependent on density and which specific blowing agent is selected. This indicates a fine closed cellular structure, with retention of the blowing agent within the cells. To be effective as thermal insulation, laminated foam panels are required to have low λ value on a long term. To prove long-term low λ value stability at room temperature, samples of foam panels are thermally aged at 70°C for an extended time period (see new European Standard EN 13166) . If λ value is low and stable after this accelerated thermal ageing, confidence exists for assuming that full size panels will provide long-term low thermal conductivity in service. In the manufacture of acid cured phenolic foam, manufacturing conditions must be carefully controlled if a closed cell foam structure is to be achieved. A foam would be classed as essentially closed cell if at least 80% of cells are closed. If stringent procedures are not followed, initial λ values can be as high 0.035W/m.K for a 20 - 80kg/m3 density foam, indicating loss of closed cell integrity and ingress of air into the cells.

Several processing factors have been identified that influence the deterioration of thermal insulation performance as measured by a drift upward in λ value.
A) If the cure temperature is too high.
B) If the concentration or amount of sulphuric acid is too high.
C) If there is a low relative humidity immediately after manufacture.

All phenolic resole resins contain water as supplied, and during curing of the resin, produce further water by a condensation polymerisation reaction. If a newly manufactured, warm phenolic foam panel is allowed to stand under ambient conditions, the residual water inside the panel can quickly dry out. This can cause shrinkage and cracking, and because foam strength has not yet fully developed, foam cells can be damaged. Insulation performance deteriorates with time an thermal conductivity increases. To prevent such rapid drying out of foam, a close fitting plastic bag can be temporally used to seal the new warm foam for a fixed period of time. This arrangement reduces water evaporation and maintains a humid atmosphere around the panel. It can be appreciated that this temporary bagging procedure is an additional manufacturing step. The elimination of this step and additional heat curing would aid phenolic foam manufacture and save costs.

In addition, when very low density phenolic foam is produced, (20-40 kg/m3), because cured phenloic resin is brittle and foam cell walls are so thin, cellular defects can occur. The blowing agent can diffuse out of such open cells and can be replaced by air. Insulation performance is consequently adversely affected.

The type and amount of catalyst used in phenolic foam manufacture has a profound effect on the long-term stability of the foam cells. Higher levels of strong acids such as sulphuric acid have been tried as catalysts in phenolic foam manufacture to enhance the cure strength and reduce cure time. However, increased catalyst levels tend to result in foams with poor initial λ values, or in which long term, aged λ values increase.

It would be desirable in manufacturing to have a more robust phenolic resin system so that maintaining high relative humidity immediately after foam panel manufacture (by sealing panels in bags) was optional. There is also a need to find a way of producing closed cell low-density phenolic foam (20 - 40 kg/m3) that has stable insulation performance over an extended time frame.

### Statements of Invention

According to the present invention there is provided a substantially closed cell phenolic insulating foam including diphenyl phosphite as an additive. The additive facilitates the formation of closed cell, low λ phenolic foam insulation, especially a low density foam.

In one embodiment, the foam is formed from a resin mixture and the diphenyl phosphite is present in the mixture (excluding blowing agent) in an amount of from 2% to 15%, preferably 4% to 7%, by weight.

The foam may have a dry density of fro 20 to 40 kg/m³.

In another aspect the invention provides a phenolic foam of density 20-40kg/m³ including diphenyl phosphite as an additive to aid and maintain closed cell formation.

In another aspect the invention provides a resin mixture for forming cellular plastic foam, the resin mixture including diphenyl phosphite.

In one embodiment the invention provides use of diphenyl phosphite as an additive to aid formation of and maintenance of closed cells in phenolic insulating foams.

### Detailed Description

It has been surprisingly found that the addition of a limited amount of diphenyl phosphite (DPP) to the phenolic resin system permits stable low λ value foams to be produced. When foam density is above approximately 40kg/m³, a sealing bag can be omitted in manufacturing. No other changes to the formulation are required. The foams produced are substantially rigid and are unlikely to distort. Manufacturing line speeds are maintained. Thus, the invention provides a method of producing, low density, closed cell phenolic foam without foam λ value instability with time.

It is believed that the DPP acts as a latent catalyst that activates around 30°C - 50°C. It may also be the case that the methylol groups of the phenolic resole can react into aromatic ring sites of DPP giving tougher foam. Table I presents examples of commercially available phenolic resole resin J6007L from Borden Chemical UK Ltd. cured in the laboratory with sulphuric acid and diphenyl phosphite at 70°C on a 50 to 75g preparation scale. J6007L has a resin solids content of 77% and a viscosity of 4000cp at 20°C. The diphenyl phosphite is mixed into phenolic resin, then HCFC blowing agent HFC141b at 0°C is premixed into a phenolic resin at 10°C to minimise evaporation weight loss. Sulphuric acid at 0°C is then rapidly stirred into the phenolic resin containing the blowing agent. Mixing in the laboratory at 10°C ensures that uniform mixing is achieved before polymerisation commences. The liquid catalysed phenolic resin mixture is quickly poured onto an aluminium plate covered by a polythene film. A similar aluminium plate is pre-located at a fixed distance above the resin mixture by means of spacers or a hinge arrangement between the two plates. The cast resin mixture and plates are then quickly transferred to an oven to cure at a set temperature for a set time. Foams in the density range 40-50 kg/m³ are produced.

Table 1 shows how insulation performance of such phenolic foam deteriorates without the use of a sealing plastic bag to prevent premature drying out. By using DPP, thermal conductivity remains low following thermal ageing at 70°C for a specified time. Diphenyl phosphite appears to aid closed cell structure stability.

**Table 1**

| **Phenolic Foam Cured With Sulphuric Acid and Diphenyl Phosphite at 70°C** | | | | | | | |
|---|---|---|---|---|---|---|---|
| **(60g preparation scale)** | | | | | | | |
| SAMPLES NOT SEALED IN A PLASTIC BAG. | | | | | | | |
| | Cured for 20 minutes at 70°C | | | | | | |
| J6007L | 100.0 | | 100.0 | | 100.0 | | 100.0 |
| HCFC blowing agent | 15.4 | | 15.4 | | 15.4 | | 15.4 |
| Diphenyl Phosphite | 0.0 | | 6.5 | | 6.5 | | 6.5 |
| 57.5% Sulphuric acid | 22.5 | | 22.5 | | 20.0 | | 16.0 |
| All samples postcured at 50°C for 16 hours | | | | | | | |
| | | | | | | | |
| Initial λ Value (W/m.K) | 0.0268 | | 0.0171 | | 0.0165 | | 0.0169 |
| | | | | | | | |
| λ Value 1 day @ 70°C | 0.0279 | | 0.0172 | | 0.0170 | | 0.0178 |
| | | | | | | | |
| λ Value 10 days @ 70°C | | | 0.0177 | | 0.0189 | | 0.0254 |
| | | | | | | | |
| λ Value 28 days @ 70°C | | | 0.0192 | | 0.0184 | | 0.0291 |
| | | | | | | | |
| λ Value 54 days @ 70°C | | | 0.0193 | | 0.0205 | | |
| | | | | | | | |

Using the same phenolic resin, and blowing agent type as was used in Table 1, Table 2 below presents the results of foam compression strength tests conducted at 70°C using phosphoric acid instead of diphenyl phosphite. Foams in the range of 40-50 kg/m3 were produced. Unlike the foam samples in Table 1, here the foam samples were actually sealed in a plastic (polyethylene) bag immediately after production in the laboratory to prevent drying out and consequential damaging of foam cells. In Table 2, the compressive tests simulate the strength of foam at the end of the production line. The assumption is that the higher the compressive strength the lower the distortion risk. The addition of diphenyl phosphite is not detrimental to the initial compressive strength of the foam. Table 2 shows that simply adding some phosphoric acid to sulphuric acid instead of DPP or TPP (comparative) results in reduced initial elevated temperature compressive strength. Increasing the amount of mixed phosphoric - sulphuric acid to increase reactivity and thereby increase initial strength compromises insulation performance as measured by thermally aged λ value (one week at 70°C).

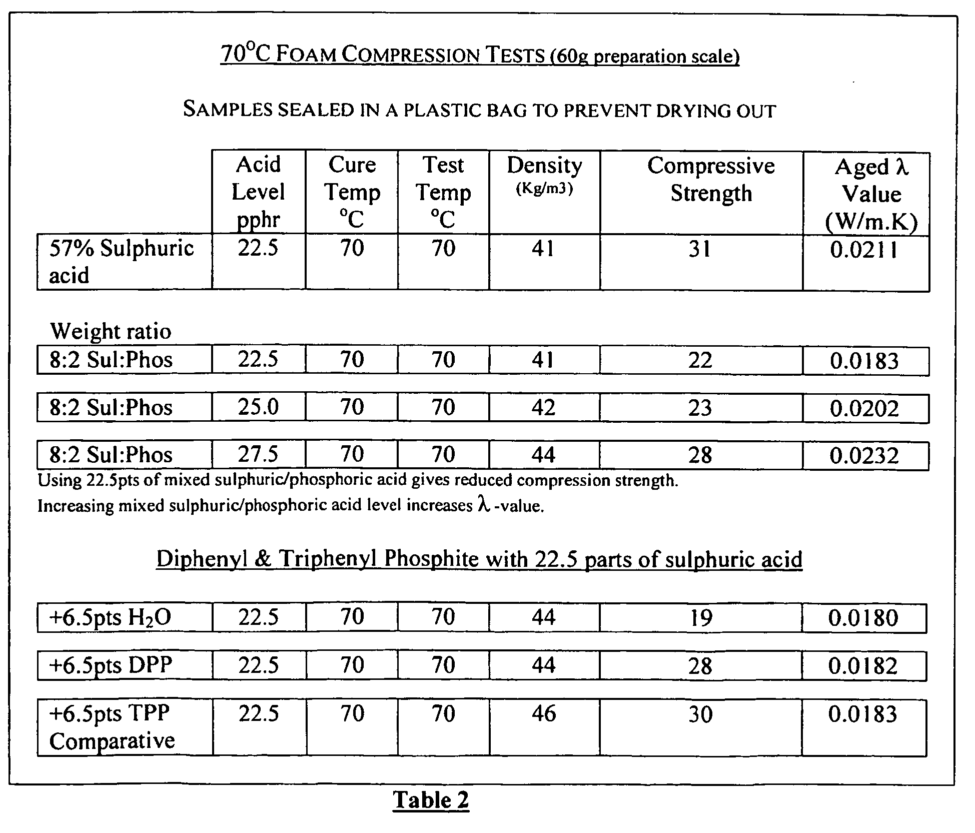

As phenolic foams using diphenyl phosphite in the density range 40-50 kg/m3 demonstrated long term low stable thermal conductivity even without need for a humidity controlling sealing bag, foams were also made at lower density (20-40 kg/m3). Such lower density foams would offer cost advantages whilst maintaining thermal insulation performance. Because of the large reduction in density foam samples made in Table 3 used a humidity protecting sealing bag to increase the likelihood of producing stable closed cell foams.
Table 3 presents examples of commercially available phenolic resin J6007L cured in the laboratory with sulphuric acid and diphenyl phosphite at 70°C on a 130 to 150g preparation scale. Two blowing agents were examined both exhibiting zero ozone depletion characteristics. Blowing agent A was a blend of cyclopentane / isopentane in weight proportions 85 / 15. Blowing agent B was a blend of HFC365 / HFC227 / in weight proportions 93 / 7. Blowing agent at 10°C is premixed into phenolic resin at 15-20°C with evaporation weight losses carefully compensated for. 57% w/w Sulphuric Acid at 10°C is then rapidly stirred at 3000rpm into the phenolic resin mixture containing the blowing agent. Uniform mixing is achieved before polymerisation commences. The catalysed phenolic resin mixture is quickly poured into a preheated mould at 70°C with each mould face covered by a polythene film to facilitate subsequent easy release from the mould. A heavy steel plate pre-warmed to 70°C is placed on the top face of the mould to pressurise the rising foam. The mould and plate are then quickly transferred to an oven to cure the foam at 70°C for a precise time. Foams in the density range 25 - 35 kg/m3 were produced and also higher density foam samples at 40-50 kg/m3 were produced for comparison.

The initial and aged thermal conductivity data for these foams is given in Table 3 below. The data shows that at lower densities, the presence of diphenyl phosphite helps maintain low thermal conductivity following thermal ageing at 70°C for 4 weeks.

**Table 3**

| | | | | | | | | |
|---|---|---|---|---|---|---|---|---|
| **J6007** | 100 | 100 | | 100 | 100 | | 100 | 100 |
| **Phenolic** | | | | | | | | |
| **Resin** | | | | | | | | |
| **Diphenyl** | 0 | 6.5 | | 0 | 6.5 | | 0 | 6.5 |
| **Phosphite** | | | | | | | | |
| **Blowing** | 7.4 | 7.4 | | 12 | 12 | | 0 | 0 |
| **Agent** A | | | | | | | | |
| **Blowing** | 0 | 0 | | 0 | 0 | | 21.2 | 21.2 |
| **Agent** B | | | | | | | | |
| **57% w/w** | 22 | 22 | | 22 | 22 | | 22 | 22 |
| **Sulphuric** | | | | | | | | |
| **Acid** | | | | | | | | |
| **Density** | 43.1 | 46.8 | | 30.1 | 30.6 | | 28.5 | 29.8 |
| **(kg/m3)** | | | | | | | | |
| **Initial λ** | 0.0218 | 0.0242 | | 0.0273 | - | | 0.235 | 0.0233 |
| **Value** | | | | | | | | |
| **(W/m.K)** | | | | | | | | |
| **Aged** λ | 0.0213 | 0.0211 | | 0.0333 | 0.0232 | | 0.0258 | 0.0225 |
| **Value** | | | | | | | | |
| **(W/m.K)** | | | | | | | | |

The invention is not limited to the embodiments herein before described, which may be varied in detail.

## Claims

1. A substantially closed cell phenolic insulating foam containing diphenyl phosphite, as an additive.

2. A foam as claimed in claim 1 wherein the foam is formed from a phenolic resole resin mixture and the diphenyl phosphite is present in the mixture (excluding blowing agent) in an amount of from 2% to 15% by weight.

3. A foam as claimed in claim 1 or 2 wherein the diphenyl phosphite is present in the mixture (excluding blowing agent) in an amount of from 4% to 7% by weight.

4. A foam as claimed in any preceding claim wherein the diphenyl phosphite is present in the mixture (excluding blowing agent) in an amount of approximately 5% by weight.

5. A foam as claimed in any preceding claim wherein the foam has a dry density of from 20 to 40 kg/m³.

6. A phenolic foam of density 20 - 40 kg/m3 including diphenyl phosphite as an additive to aid and maintain closed cell formation.

7. A resin mixture for forming a substantially closed cell insulating phenolic foam, the resin mixture including diphenyl phosphite.

8. Use of diphenyl phosphite as an additive to aid formation of and maintenance of closed cells in phenolic insulating foams.

## Patentansprüche

1. Phenol-Isolierschaum mit wesentlich geschlossenen Zellen, der Diphenylphosphit als ein Addititv enthält.

2. Schaum nach Anspruch 1, worin der Schaum aus einer Phenolresol-Harzmischung gebildet wird und das Diphenylphosphit in der Mischung (mit Ausnahme von Treibmittel) in einer Menge von 2 Gewichts-% bis 15 Gewichts-% vorliegt.

3. Schaum nach Anspruch 1 oder 2, worin das Diphenylphosphit in der Mischung (mit Ausnahme von Treibmittel) in einer Menge von 4 Gewichts-% bis 7 Gewichts-% vorliegt.

4. Schaum nach einem vorstehenden Anspruch, worin das Diphenylphosphit in der Mischung (mit Ausnahme von Treibmittel) in einer Menge von ungefähr 5 Gewichts-% vorliegt.

5. Schaum nach einem vorstehenden Anspruch, worin der Schaum eine Trockendichte von 20 bis 40 kg/m³ aufweist.

6. Phenolschaum der Dichte 20-40 kg/m³, der Diphenylphosphit als ein Additiv zum Unterstützen und Aufrechterhalten der Bildung von geschlossenen Zellen einschließt.

7. Harzmischung zum Bilden eines isolierenden Phenolschaums mit wesentlich geschlossenen Zellen, wobei die Harzmischung Diphenylphosphit einschließt.

8. Verwendung von Diphenylphosphit als ein Additiv zum Unterstützen der Bildung und Aufrechterhaltung von geschlossenen Zellen in Phenol-Isolierschäumen.

## Revendications

1. Mousse phénolique isolante à cellules essentiellement fermées contenant du phosphite de diphényle en tant qu'additif.

2. Mousse selon la revendication 1, dans laquelle la mousse est formée à partir d'un mélange de résine résol phénolique et le phosphite de diphényle est présent dans le mélange (hors agent gonflant) en une quantité de 2 % à 15 % en poids.

3. Mousse selon la revendication 1 ou 2, dans laquelle le phosphite de diphényle est présent dans le mélange (hors agent gonflant) en une quantité de 4 % à 7 % en poids.

4. Mousse selon une revendication précédente quelconque, dans laquelle le phosphite de diphényle est présent dans le mélange (hors agent gonflant) en une quantité d'environ 5 % en poids.

5. Mousse selon une revendication précédente quelconque, dans laquelle la mousse présente une densité sèche de 20 à 40 kg/m³.

6. Mousse phénolique d'une densité de 20 à 40 kg/m³ comprenant du phosphite de diphényle en tant qu'additif pour favoriser et maintenir la formation de cellules fermées.

7. Mélange de résines en vue de former une mousse phénolique isolante à cellules essentiellement fermées, le mélange de résines comprenant du phosphite de diphényle.

8. Utilisation de phosphite de diphényle en tant qu'additif pour favoriser la formation et le maintien de cellules fermées dans des mousses phénoliques isolantes.
